# EUROPEAN PATENT APPLICATION

(11) **EP 4 535 912 A1**
(43) Date of publication of application: **09.04.2025**
(21) Application number: 22944843.6
(22) Date of filing: 31.05.2022
(51) Int. Cl.: H04W 74/08, H04W 16/14, H04W 72/12

(54) **TERMINAL AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); SHIBAIKE, Naoya, Tokyo 100-6150 (JP); NAGATA, Satoshi, Tokyo 100-6150 (JP)
(74) Representative: Hoffmann Eitle
(86) International application number: PCT/JP2022/022230
(87) International publication number: WO 2023/233556

(57) **Abstract**

A terminal includes: a transmitting unit configured to transmit a first signal to another terminal in an unlicensed band; and a control unit configured to carry out a first listen before talk (LBT) before the first signal is transmitted. When a predetermined condition is satisfied after the first LBT is started, the control unit cancels the first LBT and carries out a second LBT. When the second LBT is successfully carried out, the transmitting unit transmits the first signal to the another terminal.

## Description

### Technical Field

The present invention relates to a terminal and a communication method in a wireless communication system.

### Background Art

In long term evolution (LTE) and a succeeding system of LTE (for example, LTE Advanced (LTE-A) and new radio (NR) (also referred to as 5G)), a device to device (D2D) technology in which terminals perform direct communication without passing through a base station has been discussed (for example, Non-Patent Document 1).

D2D reduces traffic between the terminal and the base station, and enables communication between the terminals even when the base station becomes incommunicable at the time of disaster or the like. Note that, in the 3rd generation partnership project (3GPP), D2D is referred to as "sidelink," but in the present specification, D2D, which is a more general term, is used. However, the term sidelink is also used as necessary in the description of the embodiment to be described later.

D2D communication is roughly divided into D2D discovery (also referred to as D2D discovery, D2D discovery) for discovering other communicable terminals and D2D communication (also referred to as D2D direct communication, D2D communication, device-to-device direct communication, and the like) for performing direct communication between the terminals. Hereinafter, the D2D communication, the D2D discovery, and the like are simply referred to as D2D when not particularly distinguished from each other. Further, a signal transmitted and received in D2D is referred to as a D2D signal. Various use cases of services related to vehicle to everything (V2X) in NR have been discussed (for example, Non-Patent Document 2).

Also, in NR Release 17 (see, for example, Non-Patent Document 3), the use of a higher frequency band than in previous releases is under study. For example, in the frequency band from 52.6 GHz to 71 GHz, applicable numerologies including subcarrier spacing and channel bandwidth, physical layer design, and problems that might arise in actual wireless communication, and so forth are studied.

### Citation List

### Non-Patent Documents

Non-Patent Document 1: 3GPP TS 38.211 V17.1.0 (2022-03)
Non-Patent Document 2: 3GPP TR 22.886 V15.1.0 (2017-03)
Non-Patent Document 3: 3GPP TS 38.306 V17.0.0 (2022-03)
Non-Patent Document 4: 3GPP TS 37.213 V17.1.0 (2022-03)

### Summary of Invention

### Technical Problem

In new frequency bands where higher frequencies are used, unlicensed bands are defined. Various regulations are set forth for an unlicensed band; for example, "listen before talk" (LBT) is performed when accessing a channel. When D2D communication is performed in a high frequency band like this, the operations need to comply with the regulations for unlicensed bands. Nevertheless, depending on the situation of terminal-to-terminal direct communication, LBT may be performed more than necessary.

The present invention has been made in view of the foregoing, and aims to apply LBT properly to terminal-to-terminal direct communication in an unlicensed band.

### Solution to Problem

According to the technique disclosed herein, a terminal is provided. The terminal has: a transmitting unit configured to transmit a first signal to another terminal in an unlicensed band; and a control unit configured to carry out a first listen before talk (LBT) before the first signal is transmitted. When a predetermined condition is satisfied after the first LBT is started, the control unit cancels the first LBT and carries out a second LBT. When the second LBT is successfully carried out, the transmitting unit transmits the first signal to the another terminal.

### Advantageous Effects of Invention

According to the technique disclosed herein, LBT can be applied properly to terminal-to-terminal direct communication in an unlicensed band.

### Brief Description of Drawings

[FIG. 1] FIG. 1 is a diagram for explaining V2X;
[FIG. 2] FIG. 2 is a diagram for explaining examples of frequency ranges according to an embodiment of the present invention;
[FIG. 3] FIG. 3 is a diagram for explaining an example (1) of LBT;
[FIG. 4] FIG. 4 is a diagram for explaining an example (2) of LBT;
[FIG. 5] FIG. 5 is a diagram for explaining an example (3) of LBT;
[FIG. 6] FIG. 6 is a diagram for explaining an example (1) of terminal-to-terminal direct communication;
[FIG. 7] FIG. 7 is a diagram for explaining an example (2) of terminal-to-terminal direct communication;
[FIG. 8] FIG. 8 is a diagram for explaining an example (3) of terminal-to-terminal direct communication;
[FIG. 9] FIG. 9 is a diagram for explaining an example (4) of terminal-to-terminal direct communication;
[FIG. 10] FIG. 10 is a diagram for explaining an example (5) of terminal-to-terminal direct communication;
[FIG. 11] FIG. 11 is a diagram for explaining an example (1) of terminal-to-terminal direct communication according to an embodiment of the present invention;
[FIG. 12] FIG. 12 is a diagram for explaining an example (2) of terminal-to-terminal direct communication according to an embodiment of the present invention;
[FIG. 13] FIG. 13 is a diagram for explaining an example (3) of terminal-to-terminal direct communication according to an embodiment of the present invention;
[FIG. 14] FIG. 14 is a diagram for explaining an example (4) of terminal-to-terminal direct communication according to an embodiment of the present invention;
[FIG. 15] FIG. 15 is a diagram showing an example functional structure of a base station 10 according to an embodiment of the present invention;
[FIG. 16] FIG. 16 is a diagram showing an example functional structure of a terminal 20 according to an embodiment of the present invention;
[FIG. 17] FIG. 17 is a diagram showing an example hardware structure of a base station 10 or a terminal 20 according to an embodiment of the present invention; and
[FIG. 18] FIG. 18 is a diagram showing an example structure of a vehicle 2001 according to an embodiment of the present invention.

### Description of Embodiments

Hereinafter, an embodiment of the present invention will be described with reference to the drawings. Note that the embodiment described below is an example, and the embodiment to which the present invention is applied is not limited to the following embodiment.

In an operation of a wireless communication system of an embodiment of the present invention, an existing technology is appropriately used. The existing technology is, for example, existing LTE, but the present invention is not limited to the existing LTE. In addition, the term "LTE" used in the present specification has a broad meaning including LTE-Advanced, systems subsequent to LTE-Advanced (for example, NR), and a wireless local area network (LAN), unless otherwise specified.

In an embodiment of the present invention, a duplex system may be a time division duplex (TDD) system, a frequency division duplex (FDD) system, or other systems (for example, flexible duplex and the like).

In addition, in an embodiment of the present invention, meaning of a radio parameter or the like being "set (configured)" may indicate that a predetermined value is configured in advance (preconfigured), or that a radio parameter indicated by a base station 10 or a terminal 20 is configured.

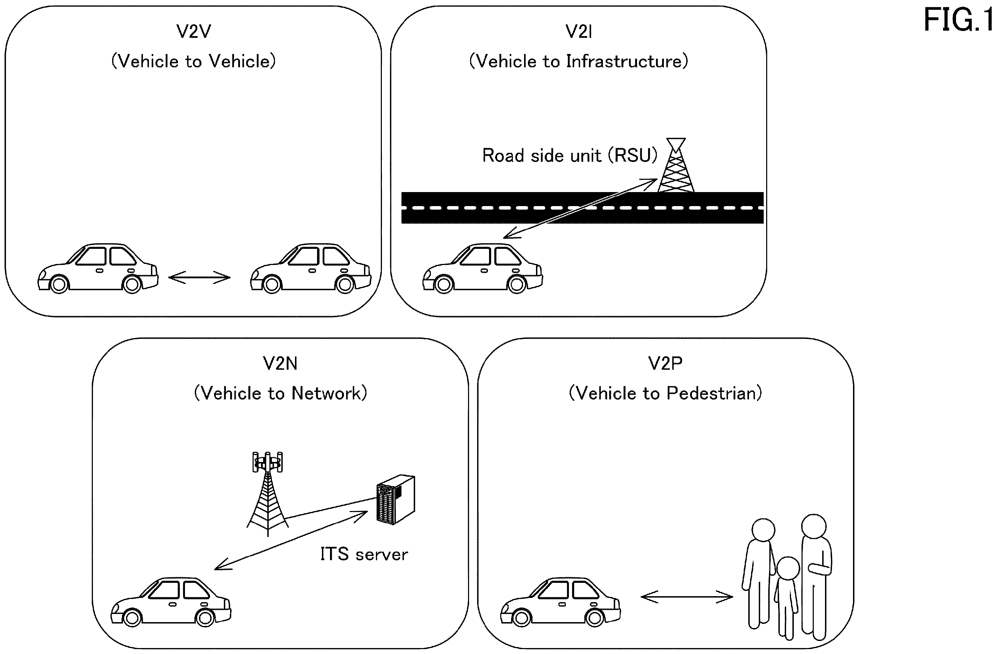

FIG. 1 is a diagram illustrating V2X. In 3GPP, realization of vehicle to everything (V2X) or enhanced V2X (eV2X) by extending a D2D function has been discussed, and technical specifications have been developed. As illustrated in FIG. 1, V2X is a part of intelligent transport systems (ITS), and is a generic name of vehicle to vehicle (V2V) meaning a communication form performed between vehicles, vehicle to infrastructure (V2I) meaning a communication form performed between a vehicle and a road-side unit (RSU) installed beside a road, vehicle to network (V2N) meaning a communication form performed between a vehicle and an ITS server, and vehicle to pedestrian (V2P) meaning a communication form performed between a vehicle and a mobile terminal possessed by a pedestrian.

In addition, in 3GPP, V2X using LTE or NR cellular communication and device-to-device communication has been discussed. V2X using cellular communication is also referred to as cellular V2X. In V2X of NR, studies to realize a large capacity, a low delay, high reliability, and quality of service (QoS) control are in progress.

Regarding V2X of LTE or NR, it is expected that the discussions will go beyond the development of the 3GPP technical specifications in the future. For example, it is expected that discussions will be held on achieving interoperability, reducing costs by implementation of an upper layer, a method of using a plurality of radio access technologies (RATs) in parallel or switching between the plurality of RATs, regulatory compliance in each country, and a method of acquiring, distributing, managing a database of, and using data of an LTE or NR V2X platform.

In the embodiment of the present invention, a use case in which a communication device is mounted on a vehicle is mainly assumed, but the embodiment of the present invention is not limited to such use case. For example, the communication device may be a terminal carried by a person, the communication device may be a device mounted on a drone or an aircraft, or the communication device may be a base station, an RSU, a relay station (a relay node), a terminal having a scheduling capability, or the like.

Note that sidelink (SL) may be distinguished from uplink (UL) or downlink (DL) based on either or a combination of the following 1) to 4). Further, SL may have another name.
1) Resource allocation in time domain
2) Resource allocation in frequency domain
3) Synchronization signal to be referred to (including sidelink synchronization signal (SLSS))
4) Reference signal used for path loss measurement for transmission power control

In addition, regarding orthogonal frequency division multiplexing (OFDM) of SL or UL, any one of cyclic-prefix OFDM (CP-OFDM), discrete Fourier transform-spread-OFDM (DFT-S-OFDM), OFDM without transform precoding, and OFDM with transform precoding may be applied.

In the SL of LTE, Mode 3 and Mode 4 are defined regarding resource allocation of the SL to the terminal 20. In Mode 3, transmission resources are dynamically allocated by downlink control information (DCI) transmitted from the base station 10 to the terminal 20. In Mode 3, semi persistent scheduling (SPS) is also possible. In Mode 4, the terminal 20 autonomously selects a transmission resource from a resource pool.

A slot in the embodiment of the present invention may be replaced with a symbol, a mini-slot, a sub-frame, a radio frame, or a transmission time interval (TTI). In addition, a cell in the embodiment of the present invention may be replaced with a cell group, a carrier component, a BWP, a resource pool, a resource, a radio access technology (RAT), a system (including a wireless LAN), or the like.

Note that, in the embodiment of the present invention, the terminal 20 is not limited to a V2X terminal, and may be any type of terminal that performs D2D communication. For example, the terminal 20 may be a terminal such as a smartphone carried by a user, or may be an Internet of Things (IoT) device such as a smart meter.

3GPP Release 16 or Release 17 sidelink is specified in the technical specifications for 1) and 2) described below.
1) Environment in which only 3GPP terminals exist in an intelligent transport systems (ITS) band
2) Environment in which UL resources are available to SL in license bands of frequency range 1 (FR1) and frequency range 2 (FR2) defined in NR

It has been discussed that an unlicensed band will be a new target of sidelink after 3GPP Release 18. For example, the newly targeted unlicensed band is an unlicensed band such as a 5 GHz to 7 GHz band or a 60 GHz band.

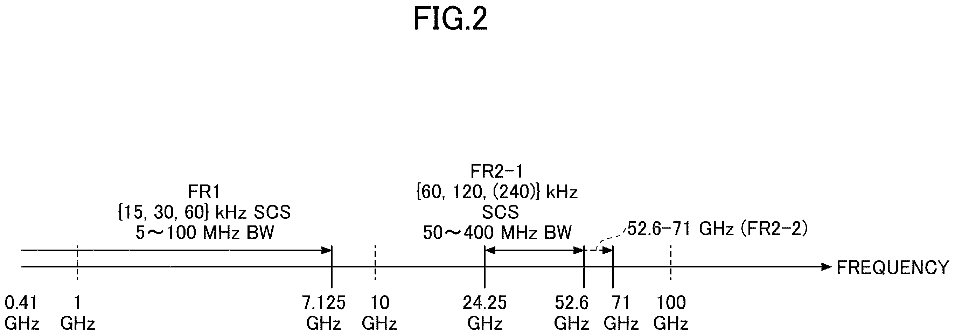

FIG. 2 shows examples of frequency bands to be used in a wireless communication system. In the specifications of NR according to 3GPP Release 15 and Release 16, for example, 52.6 GHz or higher frequency bands are under study for operation. Note that, as shown in FIG. 2, the frequency range (FR) 1 specified for operation at present is the frequency band from 410 MHz to 7.125 GHz, where the subcarrier spacing (SCS) is 15 kHz, 30 kHz, or 60 kHz, and the bandwidth ranges from 5 MHz to 100 MHz.

FR2-1 is the frequency band from 24.25 GHz to 52.6 GHz, where the SCS is 60 kHz, 120 kHz or 240 kHz, and the bandwidth ranges from 50 MHz to 400 MHz. As shown in FIG. 2, for example, FR2-2 may be assumed to range from 52.6 GHz to 71 GHz. Furthermore, supporting frequency bands beyond 71 GHz may be assumed as well.

When using bands beyond 52.6 GHz, cyclic prefix-orthogonal frequency division multiplexing (CP-OFDM)/discrete Fourier transform-spread OFDM (DFT-S-OFDM) with larger subcarrier spacing (SCS) may be applied.

Also, in high frequency bands such as FR2-2, increased phase noise between carriers becomes an issue. Consequently, it may be necessary to apply larger (wider) SCS or a single-carrier waveform.

For example, as an example of the unlicensed band in the 5 GHz to 7 GHz band, 5.15 GHz to 5.35 GHz, 5.47 GHz to 5.725 GHz, 5.925 GHz or more, and the like are expected.

For example, as examples of unlicensed bands in the 60 GHz band, 59 GHz to 66 GHz, 57 GHz to 64 GHz or 66 GHz, 59.4 GHz to 62.9 GHz, and the like are expected.

In the unlicensed band, various regulations are set in order not to affect other systems or other devices.

For example, listen before talk (LBT) is performed when accessing a channel, in the 5 GHz band to the 7 GHz band. The base station 10 or the terminal 20 performs power detection in a predetermined period shortly before performing a transmission, and cancels the transmission when power to exceed a certain value is detected, that is, when another device's transmission is detected, for example. In addition, the maximum channel occupancy time (MCOT) is specified. MCOT is the maximum period of time in which a transmission that is started after LBT is performed is allowed to be continued; it is, for example, 4 ms in Japan.

In addition, there is an occupied channel bandwidth (OCB) requirement that sets forth that, when using a certain carrier bandwidth for a transmission, X% or more of the band need to be used. For example, in Europe, use of 80% to 100% of a nominal channel bandwidth (NCB) is required. The OCB requirement is intended to ensure proper execution of power detection upon channel access.

As for the maximum transmission power and the maximum power spectral density, it is specified that a transmission be performed using predetermined transmission power or less. For example, in Europe, 23 dBm is the maximum transmission power in the band from 5,150 MHz to 5,350 MHz. In addition, for example, in Europe, the maximum power spectral density is 10 dBm/MHz in the band from 5,150 MHz to 5,350 MHz.

For example, LBT is performed when accessing a channel in the 60 GHz band. The base station 10 or the terminal 20 performs power detection in a predetermined period shortly before performing a transmission. If power beyond a certain value is detected, that is, if a transmission from another device is detected, the base station 10 or the terminal 20 cancels the transmission. As for the maximum transmission power and the maximum power spectral density, it is specified that a transmission be performed at predetermined transmission power or less. It is also specified that the base station 10 or the terminal 20 should have capabilities to satisfy the OCB requirement.

In NR, the following four types of channel access procedures are defined based on the variation in LBT's behavior in time (that is, the variation in the period of time for performing sensing).

Type 1) Variable time sensing is executed before transmission. Type 1 is also referred to as category-4 LBT.

Type 2A) 25 µs sensing is executed before transmission. Type 2A is also referred to as category-2 LBT.

Type 2B) 16 µs sensing is executed before transmission. Type 2B is also referred to as category-2 LBT.

Type 2C) Transmission starts without performing LBT. Type 2C is similar to transmission in the licensed band.

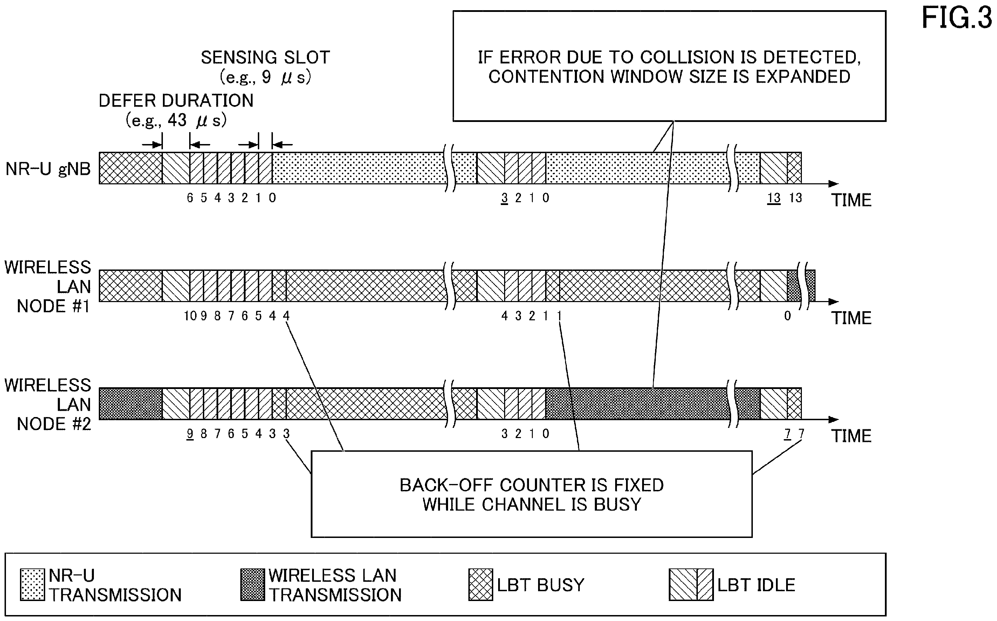

FIG. 3 is a diagram illustrating an example (1) of LBT. FIG. 3 is an example of a channel access procedure of Type 1. Type 1 is further classified into four classes indicating a channel access priority class based on a difference in sensing length. Sensing is executed in the following two periods of time.

The first period is a prioritization period or a defer duration and has a length of 16 + 9×mₚ [µs]. A fixed value of mₚ is defined for each channel access priority class.

The second period is a back-off procedure and 9×N [µs] long. The value of N is randomly determined from a certain range (see, for example, the CWS adjustment procedure of Non-Patent Document 4).

The above 9-µs sensing period may be referred to as a "sensing slot period."

In the example of FIG. 3, mₚ is 3, and the defer duration is 43 µs. As illustrated in FIG. 3, the back-off counter is fixed while a channel is busy. In addition, as illustrated in FIG. 3, if a transmission from an NR-U gNB and a transmission from a wireless LAN node #2 collide with each other, and an error is detected thus, the contention window size is expanded from 3 to 13 in the NR-U gNB.

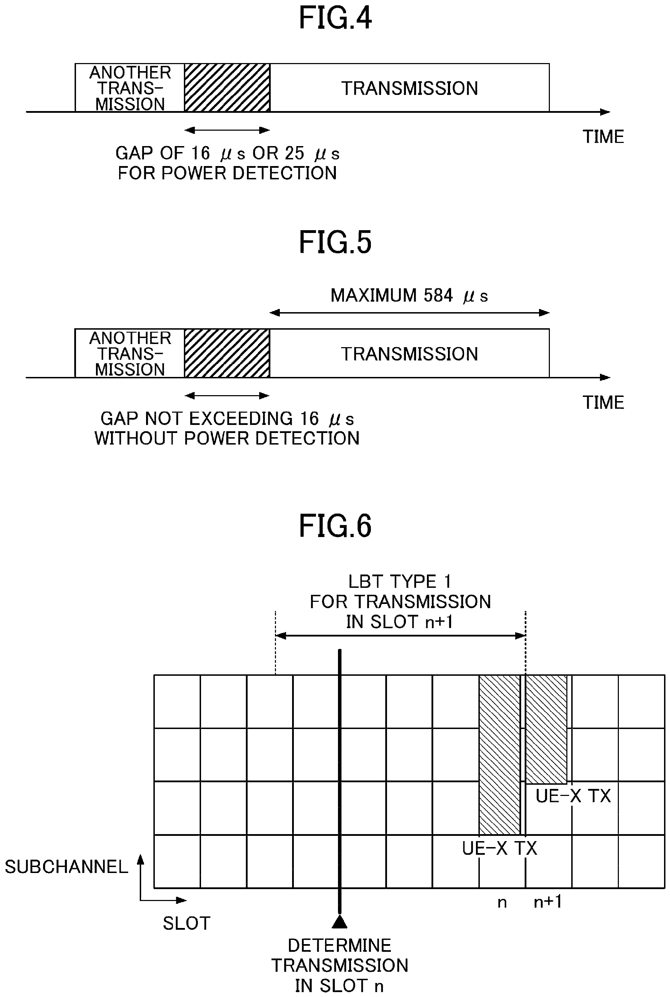

FIG. 4 is a diagram illustrating an example (2) of LBT. FIG. 4 is an example of the channel access procedure of Type 2A or Type 2B without random back-off. A gap for performing power detection of 25 µs for Type 2A or 16 µs for Type 2B is configured before transmission.

FIG. 5 is a diagram illustrating an example (3) of LBT. FIG. 5 is an example of the channel access procedure of Type 2C. As illustrated in FIG. 5, no power detection is performed before transmission, and after a gap not exceeding 16 µs, transmission is performed immediately. The transmission period may be up to 584 µs.

As mentioned earlier, multiple types of LBT are supported in NR-U. In the above type 1, for the initial value N of the back-off counter, a random number is selected from a range from 0 to CWₚ; the range of values is determined based on a channel access priority class p. Table 1 shows examples of: mₚ, which is specified per channel access priority class p in UL; the minimum value CW_{p,min} of CWₚ; and the maximum value CW_{p,max} of CWₚ.

**[Table 1]**

| Class p | mₚ | CW_{min, p} | CW_{max, p} |
|---|---|---|---|
| 1 | 2 | 3 | 7 |
| 2 | 2 | 7 | 15 |
| 3 | 3 | 15 | 1023 |
| 4 | 7 | 15 | 1023 |

As shown in Table 1, mₚ, CW_{p,min}, and CW_{p,max} are determined based on a channel access priority class p. In the event p is 1, according to Table 1, the LBT period is calculated to be 34 µs at a minimum and 88 µs at a maximum. In the event p is 2, according to Table 1, the LBT period is calculated to be 34 µs at a minimum and 160 µs at a maximum. In the event p is 3, according to Table 1, the LBT period is calculated to be 43 µs at a minimum and 9,286 µs at a maximum. In the event p is 4, according to Table 1, the LBT period is calculated to be 79 µs at a minimum and 9,286 µs at a maximum.

The LBT type and the channel access priority class may be determined based on an indication from the base station 10, the channel type, and so forth. The 25-µs or 16-µs gap may be configured by the base station 10's scheduling, taking into account timing advance (TA) and CP extension.

Whether LBT type 2A, 2B, or 2C can be applied or not is determined based on whether or not another transmission is scheduled within a gap of 25 µs, 16 µs, or less than 16 µs immediately before the terminal 20 (hereinafter referred to as "UE-X") performs a transmission. If another transmission is scheduled within this gap, LBT type 2A, 2B, or 2C may be applied.

The LBT period in LTE type 1 may be very long. For example, in UL, the maximum LBT period is 9,286 µs. In this case, prior to the timing at which whether or not LBT type 2A, 2B, or 2C can be applied is determined, the timing at which LBT type 1 starts might arrive. In this case, the UE-X may employ a technique for avoiding LBT failures based on LBT type 1.

For example, if the UE-X is to perform a transmission immediately before another transmission, the timing to start LBT type 1 might arrive before the timing at which the preceding transmission's execution is confirmed arrives.

FIG. 6 is a diagram for explaining an example (1) of terminal-to-terminal direct communication. The case shown in FIG. 6 will be referred to as a "case 1-1." As shown in FIG. 6, when the UE-X carries out a PSCCH/PSSCH transmission in a slot n+1 and also carries out a PSCCH/PSSCH transmission in a slot n (non-PSFCH slot), the timing for starting LBT type 1 for the transmission in slot n+1 arrives before the transmission in slot n is determined by higher layer to be carried out. In other words, even if another transmission is scheduled in a gap located immediately before where the UE-X performs a transmission (i.e., when the condition for applying LBT type 2A, 2B, or 2C is satisfied), the UE-X may have to cancel the transmission depending on LBT type 1.

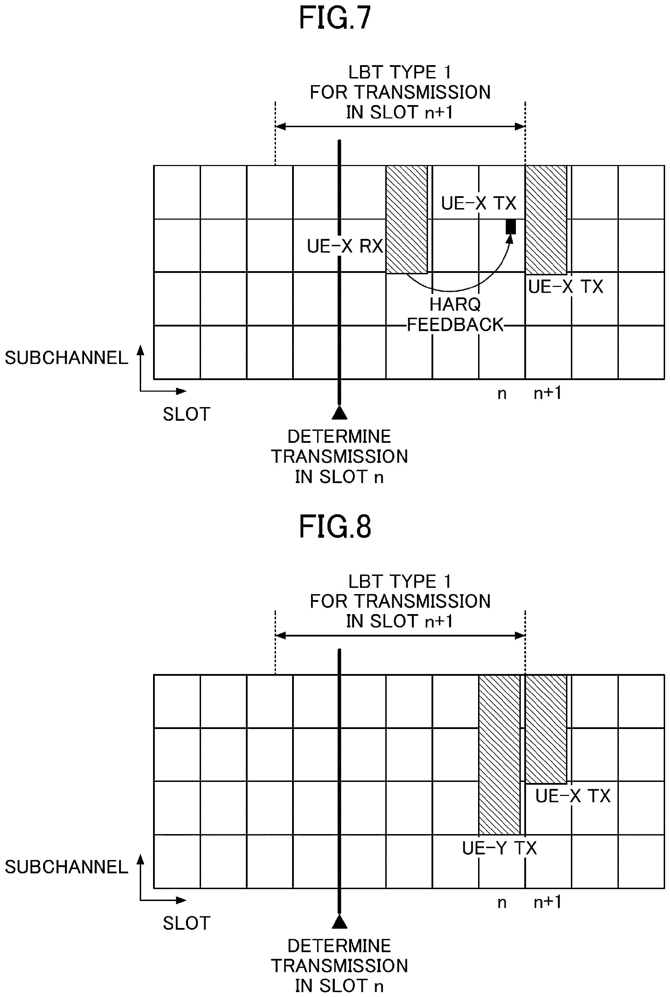

FIG. 7 is a diagram for explaining an example (2) of terminal-to-terminal direct communication. The case shown in FIG. 7 will be referred to as a "case 1-2." As shown in FIG. 7, when the UE-X carries out a PSCCH/PSSCH transmission in slot n+1 and also carries out a PSFCH transmission in slot n (PSFCH slot), the timing for starting LBT type 1 for the transmission in slot n+1 arrives before a PSCCH/PSSCH transmitted in response to the PSFCH transmission in slot n is completely received. In other words, even if another transmission is scheduled in a gap located immediately before where the UE-X performs a transmission (i.e., when the condition for applying LBT type 2A, 2B, or 2C is satisfied), the UE-X may have to cancel the transmission depending on LBT type 1.

For example, if the above preceding transmission is one by another UE (hereinafter referred to as a "UE-Y"), the timing to start LBT type 1 might arrive before the timing at which UE-Y's transmission is detected.

FIG. 8 is a diagram for explaining an example (3) of terminal-to-terminal direct communication. The case shown in FIG. 8 will be referred to as a "case 2-1." As shown in FIG. 8, when the UE-X carries out a PSCCH/PSSCH transmission in slot n+1 and the UE-Y carries out a PSCCH/PSSCH transmission in slot n (non-PSFCH slot), the timing for starting LBT type 1 for the transmission in slot n+1 arrives before the UE-X detects (e.g., decodes) the PSCCH/PSSCH transmission of slot n. In other words, even if another transmission is scheduled in a gap located immediately before where the UE-X performs a transmission (i.e., when the condition for applying LBT type 2A, 2B, or 2C is satisfied), the UE-X may have to cancel the transmission depending on LBT type 1.

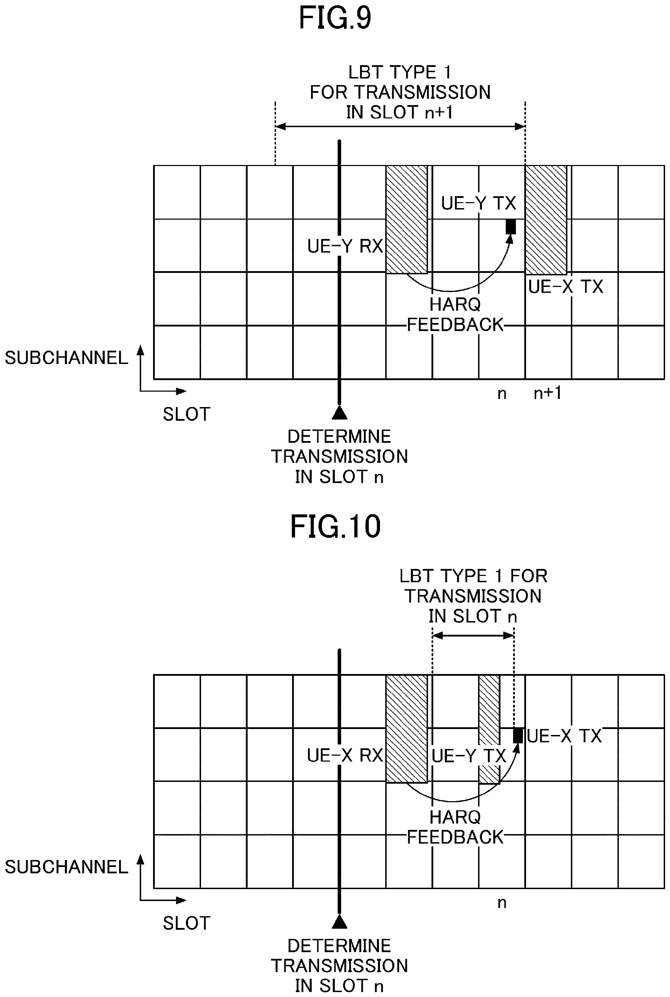

FIG. 9 is a diagram for explaining an example (4) of terminal-to-terminal direct communication. The case shown in FIG. 9 will be referred to as a "case 2-2." As shown in FIG. 9, when the UE-X carries out a PSCCH/PSSCH transmission in slot n+1 and the UE-Y carries out a PSFCH transmission in slot n (PSFCH slot), the timing for starting LBT type 1 for the transmission in slot n+1 arrives before the UE-X detects (e.g., decodes) the PSFCH transmission of slot n. In other words, even if another transmission is scheduled in a gap located immediately before where the UE-X performs a transmission (i.e., when the condition for applying LBT type 2A, 2B, or 2C is satisfied), the UE-X may have to cancel the transmission depending on LBT type 1.

FIG. 10 is a diagram for explaining an example (5) of terminal-to-terminal direct communication. The case shown in FIG. 10 will be referred to as a "case 2-3." As shown in FIG. 10, when the UE-X carries out a PSFCH transmission in slot n and the UE-Y also carries out a PSCCH/PSSCH transmission in slot n (PSFCH slot), the timing for starting LBT type 1 for the PSFCH transmission in slot n arrives before the UE-X detects (e.g., decodes) the PSCCH/PSSCH transmission of slot n. In other words, even if another transmission is scheduled in a gap located immediately before where the UE-X performs a transmission (i.e., when the condition for applying LBT type 2A, 2B, or 2C is satisfied), the UE-X may have to cancel the transmission depending on LBT type 1.

So, when the terminal 20 carries out one SL transmission (hereinafter referred to as a "transmission P") in an unlicensed band, the terminal 20 may carry out the transmission by switching between multiple methods of channel access mechanism (hereinafter referred to as "LBT") to be applied immediately before the transmission is carried out, based on predetermined conditions. Note that "switching between multiple methods" may mean cancelling one method and starting another, or mean continuing running one method while starting another.

When the UE-X determines that the type of LBT to carry out for the transmission P is type 1 and/or starts carrying out LBT type 1 at a certain timing t, the UE-X may carry out LBT type 1 until the timing t', at which the UE-X starts the transmission. If the UE-X does not detect a transmission by another UE or another device between t and t', the UE-X may carry out the transmission P.

Also, if the UE-X determines that the type of LBT to carry out for the transmission P is type 1 and/or starts carrying out LBT type 1 at a certain timing t and detects a transmission by another UE or another device between t and the transmission start timing t', the UE-X may continue LBT type 1 until a predetermined timing T. The predetermined timing T may be any of following (A) to (G), for example, and may be selected based on any condition of choice.

(A) Timing at which LBT type switching might occur;
(B) Timing at which LBT type switching occurs;
(C) Timing at which LBT type switching is determined to be carried out;
(D) Timing at which a channel or a signal to match the condition for switching the type of LBT is detected;
(E) Timing at which a channel or a signal to match the condition for switching the type of LBT is transmitted or received;
(F) Timing at which a channel or a signal to match the condition for switching the type of LBT is confirmed to be transmitted or received (e.g., when a reevaluation or a preemption check is performed and the condition for resource reselection is not satisfied); and
(G) Timing t' at which the transmission P starts.

If the condition for switching the method of LBT, which will be described later, is not satisfied, LBT type 1 may be carried out in the next transmission occasion based on the timing at which a transmission by another UE or another device is detected. For example, if the condition for switching the method of LBT, which will be described later, is not satisfied, the state of the back-off counter as of the timing when a transmission by another UE or another device is detected may be maintained, and the back-off counter, maintained in this state, may be used to start carrying out LBT type 1 in the next transmission occasion.

If the condition for switching the method of LBT, which will be described later, is satisfied, whether or not it is possible to switch to a predetermined LBT method and carry out the transmission P may be determined. For example, even if a transmission by another UE or another device is detected during LBT type 1 before the method of LBT is switched, the transmission P may be carried out if the LBT method after the switching is a successful one. For example, if the condition for switching the method of LBT, which will be described later, is satisfied, whether or not it is possible to cancel LBT type 1, switch to a predetermined LBT method, and carry out the transmission P may be determined.

The condition for switching the method of LBT may be satisfied when, for example, an SL transmission is determined to be carried out or detected after LBT type 1 is determined to be carried out or started being carried out, before (e.g., immediately before) the transmission P is carried out. For example, the condition for switching the method of LBT may be satisfied when, after LBT type 1 is determined to be carried out or started being carried out, another SL transmission is determined to be carried out or detected 25 µs, 16 µs, or within 16 µs before the transmission P.

When the condition for switching the method of LBT is satisfied, switching LBT type 1 to another LBT method, such as LBT type 2A, 2B, or 2C, shorter LBT, LBT type 1 with a shorter back-off, LBT type 1 with a different CAPC, and so forth, may be determined.

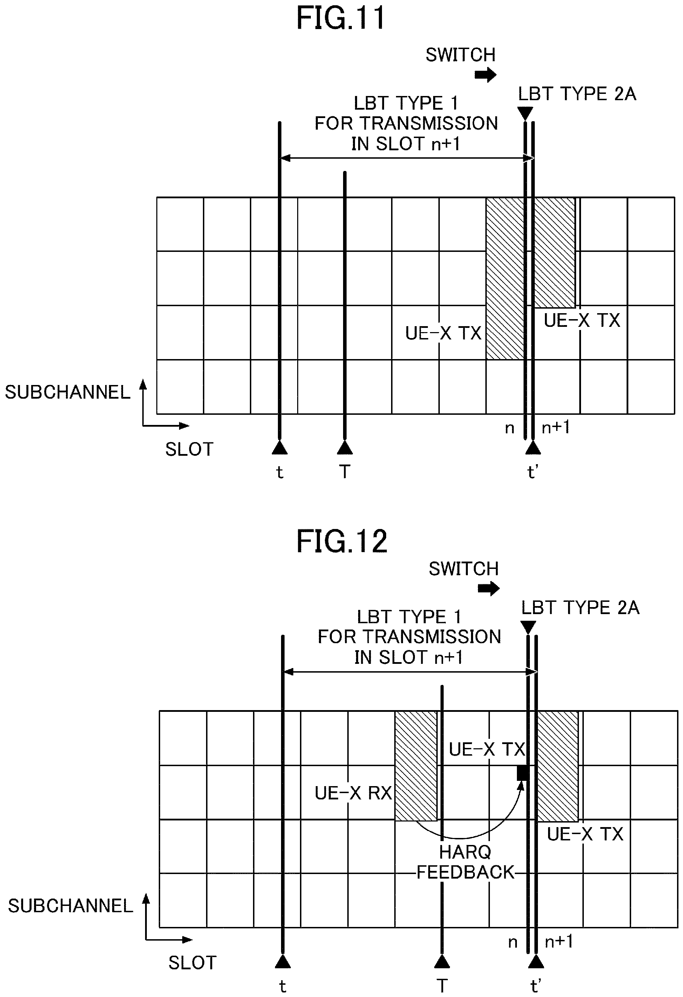

The case where the condition for switching the method of LBT is satisfied may be, for example, the ones described below. Note that, although FIG. 11 to FIG. 14 show examples in which LBT type 1 is switched to LBT type 2A, the LBT method to be switched to is by no means limited to LBT type 2A. The condition for the switching may also be defined or determined based on an indication of COT sharing.

FIG. 11 is a diagram for explaining an example (1) of terminal-to-terminal direct communication according to an embodiment of the present invention. In FIG. 11, when a PSCCH/PSSCH transmission is determined to be carried out in slot n, the UE-X may assume that the condition for switching the method of LBT is satisfied. "T" shown in FIG. 11 is an example timing at which the UE-X determines to carry out a PSCCH/PSSCH transmission in slot n.

FIG. 12 is a diagram for explaining an example (2) of terminal-to-terminal direct communication according to an embodiment of the present invention. In FIG. 12, when the UE-X determines to carry out a PSFCH transmission in slot n, the UE-X may assume that the condition for switching the method of LBT is satisfied. "T" shown in FIG. 12 is an example timing at which the UE-X determines to carry out a PSFCH transmission in slot n.

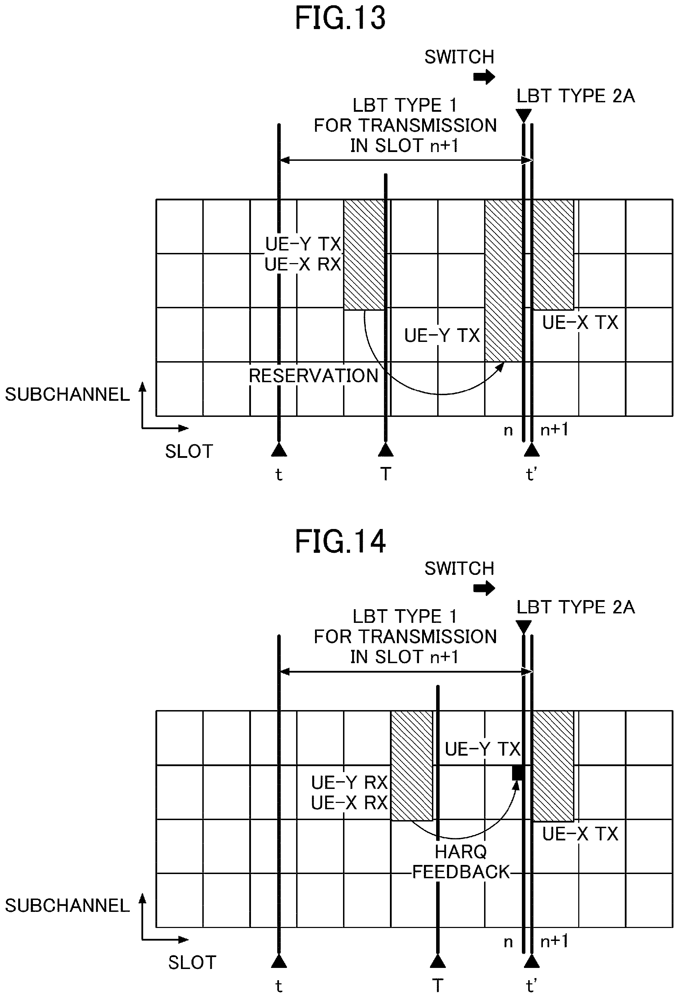

FIG. 13 is a diagram for explaining an example (3) of terminal-to-terminal direct communication according to an embodiment of the present invention. In FIG. 13, when the UE-X detects that another UE (UE-Y) is carrying out a PSCCH/PSSCH transmission in slot n, the UE-X may assume that the condition for switching the method of LBT is satisfied.

Also, in FIG. 13, when the UE-X detects that another UE (UE-Y) is going to carry out a PSCCH/PSSCH transmission in slot n, that is, when the UE-X detects a resource reservation by another UE, the UE-X may assume that the condition for switching the method of LBT is satisfied. "T" shown in FIG. 13 is an example timing at which the UE-X detects that another UE (UE-Y) is going to carry out a PSCCH/PSSCH transmission in slot n. However, if this reserved PSCCH/PSSCH transmission is not carried out, the UE-X may determine whether or not it is possible to carry out the transmission P based on LBT type 1, without switching the method of LBT.

FIG. 14 is a diagram for explaining an example (4) of terminal-to-terminal direct communication according to an embodiment of the present invention. In FIG. 14, when the UE-X detects that another UE (UE-Y) is carrying out a PSFCH transmission in slot n, the UE-X may assume that the condition for switching the method of LBT is satisfied.

Also, referring to FIG. 14, when the UE-X detects that another UE (UE-Y) is going to carry out a PSFCH transmission in slot n, that is, when the UE-X detects a corresponding PSCCH/PSSCH, the UE-X may assume that the condition for switching the method of LBT is satisfied. "T" shown in FIG. 14 is an example timing at which the UE-X detects, in slot n, a PSCCH/PSSCH transmission that corresponds to the PSFCH of slot n from another UE (UE-Y). However, if this PSFCH transmission is not carried out, the UE-X may determine whether or not it is possible to carry out the transmission P based on LBT type 1, without switching the method of LBT.

Also, in FIG. 10, when the UE-X detects that another UE (UE-Y) is carrying out a PSCCH/PSSCH transmission in slot n, the UE-X may assume that the condition for switching the method of LBT is satisfied.

The channel in each of the above cases may be replaced with another channel or another signal (e.g., S-SSB, SL positioning RS, etc.).

Note that, in the embodiment described above, the structure of existing SL channels and SL signals is used, but this is by no means a limitation. For example, this embodiment may be applied even when an interlaced channel is applied as a structure for satisfying the OCB requirement.

Note that the above embodiment may be applied only when a predetermined condition is satisfied. For example, the above-described embodiment may be applied in relation to a specific SL channel or SL signal. For example, this embodiment may be applied to any of PSCCH/PSSCH, PSFCH, S-SSB, and SL positioning RS. For example, the above-described embodiment may be applied based on a predetermined configuration or a pre-configuration. For example, this embodiment may be applied when a configuration or a re-configuration to "enable" this embodiment is given in a resource pool.

Note that, in order to apply LBT type 2A, 2B, or 2C, an additional transmission or the like may be executed immediately before the transmission P. For example, CP extension may be executed.

Note that the method according to the embodiment of the present invention is by no means limited to the cases of terminal-to-terminal direct communication described hereinabove, and may be applied to other similar cases as well.

The above-described embodiment is by no means limited to V2X terminals, and may be applied to terminals that perform D2D communication.

According to the embodiment described above, when LBT is carried out before an SL transmissions in an unlicensed band, it is possible to switch to the minimum LBT method that satisfies the regulations, depending on the situation of communication.

In other words, LBT can be applied properly to terminal-to-terminal direct communication in an unlicensed band.

### (Device structure)

Next, functional configuration examples of the base station 10 and the terminal 20 that execute the processing and operation described above will be described. The base station 10 and the terminal 20 include a function of implementing the above-described embodiment. However, each of the base station 10 and the terminal 20 may have only a part of functions in the embodiment.

### <Base Station 10>

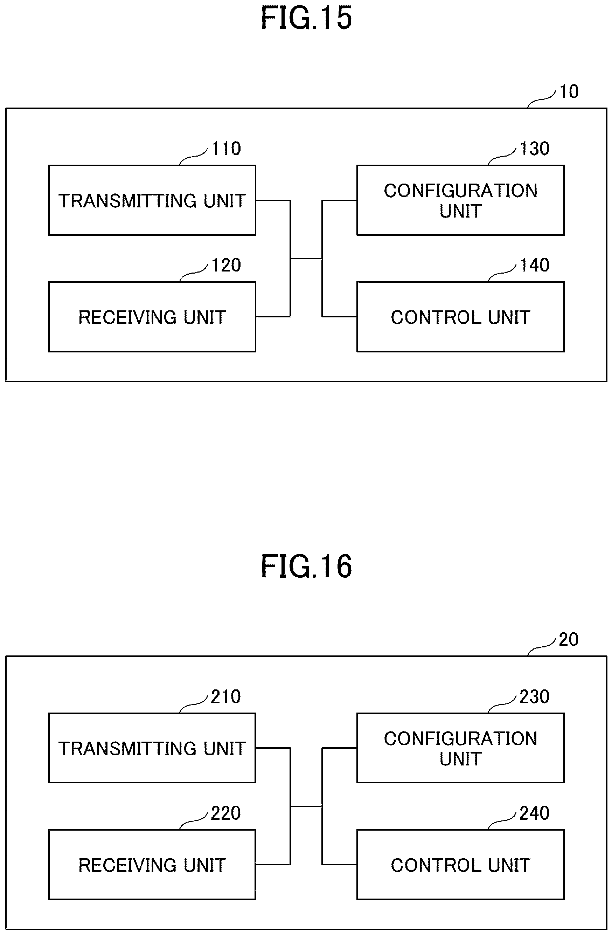

FIG. 15 is a diagram illustrating an example of a functional configuration of the base station 10. As illustrated in FIG. 15, the base station 10 includes a transmission unit 110, a reception unit 120, a configuration unit 130, and a control unit 140. The functional configuration illustrated in FIG. 15 is merely an example. As long as the operation according to the embodiment of the present invention can be executed, the functional classification and the name of the functional units may be freely selected.

The transmission unit 110 has a function of generating a signal to be transmitted to the terminal 20 side and wirelessly transmitting the signal. The reception unit 120 has a function of receiving various signals transmitted from the terminal 20 and acquiring, for example, information of an upper layer from the received signals. In addition, the transmission unit 110 has a function of transmitting NR-PSS, NR-SSS, NR-PBCH, a DL/UL control signal, a DL reference signal, and the like to the terminal 20.

The configuration unit 130 stores setting information set in advance and various types of setting information to be transmitted to the terminal 20 in a storage device, and reads the setting information from the storage device as necessary. A content of the setting information is, for example, information related to setting of the D2D communication.

As described in the embodiment, the control unit 140 performs processing related to setting for the terminal 20 to perform the D2D communication. Furthermore, the control unit 140 transmits scheduling of the D2D communication and the DL communication to the terminal 20 via the transmission unit 110. Furthermore, the control unit 140 receives information regarding HARQ responses of the D2D communication and the DL communication from the terminal 20 via the reception unit 120. The functional unit related to signal transmission in the control unit 140 may be included in the transmission unit 110, and the functional unit related to signal reception in the control unit 140 may be included in the reception unit 120.

### <Terminal 20>

FIG. 16 is a diagram illustrating an example of a functional configuration of the terminal 20. As illustrated in FIG. 16, the terminal 20 includes a transmission unit 210, a reception unit 220, a configuration unit 230, and a control unit 240. The functional configuration illustrated in FIG. 16 is merely an example. As long as the operation according to the embodiment of the present invention can be executed, the functional classification and the name of the functional units may be freely selected.

The transmission unit 210 generates a transmission signal from transmission data and wirelessly transmits the transmission signal. The reception unit 220 wirelessly receives various signals and acquires a signal of an upper layer from the received signals of a physical layer. Furthermore, the reception unit 220 has a function of receiving NR-PSS, NR-SSS, NR-PBCH, a DL/UL/SL control signal, a reference signal, and the like transmitted from the base station 10. Furthermore, for example, the transmission unit 210 transmits a physical sidelink control channel (PSCCH), a physical sidelink shared channel (PSSCH), a physical sidelink discovery channel (PSDCH), a physical sidelink broadcast channel (PSBCH), or the like to the other terminal 20 as the D2D communication, and the reception unit 220 receives PSCCH, PSSCH, PSDCH, PSBCH, or the like from the other terminal 20.

The configuration unit 230 stores various types of setting information received from the base station 10 or the terminal 20 by the reception unit 220 in a storage device, and reads the setting information from the storage device as necessary. The configuration unit 230 also stores setting information set in advance. A content of the setting information is, for example, information related to setting of the D2D communication.

As described in the embodiment, the control unit 240 controls the D2D communication for establishing an RRC connection with another terminal 20. Furthermore, the control unit 240 performs processing related to a power saving operation. Furthermore, the control unit 240 performs processing related to HARQ of the D2D communication and the DL communication. Furthermore, the control unit 240 transmits, to the base station 10, information regarding HARQ responses of the D2D communication and the DL communication scheduled from the base station 10 to another terminal 20. Furthermore, the control unit 240 may schedule the D2D communication to another terminal 20. Furthermore, the control unit 240 may autonomously select a resource to be used for the D2D communication from a resource selection window based on a result of sensing, or may execute reevaluation or pre-emption. Furthermore, the control unit 240 performs processing related to power saving in transmission and reception of the D2D communication. Furthermore, the control unit 240 performs processing related to inter-terminal cooperation in the D2D communication. The functional unit related to signal transmission in the control unit 240 may be included in the transmission unit 210, and the functional unit related to signal reception in the control unit 240 may be included in the reception unit 220.

### (Hardware structure)

The block diagrams (FIG. 15 and FIG. 16) used for the description of the above embodiment illustrate blocks of functional units. The functional blocks (configuration units) are realized by any combination of at least one of hardware and software. A method of implementing each functional block is not particularly limited. That is, each functional block may be implemented by using one physically or logically combined device, or may be implemented by directly or indirectly (for example, by using wired, wireless, or the like) connecting two or more physically or logically separated devices to each other and using the plurality of devices. The functional block may be implemented by combining software with the one device or the plurality of devices.

The functions include, but are not limited to, deciding, determining, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating and mapping, assigning, and the like. For example, a functional block (configuration unit) that causes transmission to function is referred to as a transmission unit (transmitting unit) or a transmitter. In any case, as described above, the implementation method is not particularly limited.

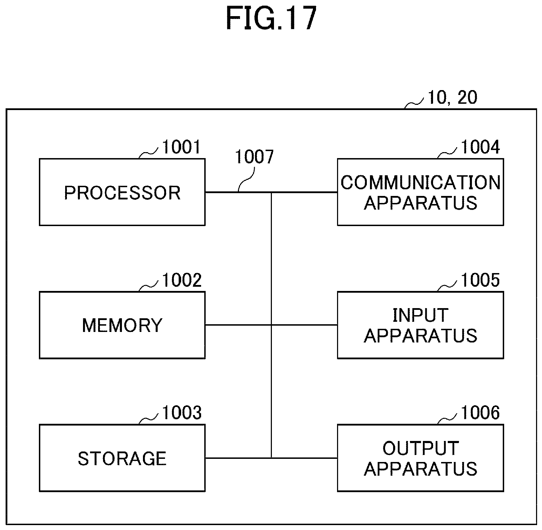

For example, the base station 10, the terminal 20, and the like in the embodiment of the present disclosure may function as a computer that performs processing of a wireless communication method of the present disclosure. FIG. 17 is a diagram illustrating an example of hardware configurations of the base station 10 and the terminal 20 according to the embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, a device, a unit, or the like. The hardware configurations of the base station 10 and the terminal 20 may be configured to include one or more devices illustrated in the drawing, or may be configured without including a part of devices.

Each function in the base station 10 and the terminal 20 is implemented by the processor 1001 performing calculation by loading predetermined software (program) on hardware such as the processor 1001 and the storage device 1002, controlling communication by the communication device 1004, and controlling at least one of reading and writing of data in the storage device 1002 and the auxiliary storage device 1003.

The processor 1001 operates, for example, an operating system to control the entire computer. The processor 1001 may include a central processing unit (CPU) including an interface with a peripheral device, a control device, an arithmetic device, a register, and the like. For example, the control unit 140, the control unit 240, and the like described above may be implemented by the processor 1001.

In addition, the processor 1001 reads a program (a program code), a software module, data, or the like from at least one of the auxiliary storage device 1003 and the communication device 1004 to the storage device 1002, and executes various types of processing according to the program, the software module, the data, or the like. As the program, a program that causes a computer to execute at least part of the operations described in the above-described embodiments is used. For example, the control unit 140 of the base station 10 illustrated in FIG. 15 may be implemented by a control program stored in the storage device 1002 and operated by the processor 1001. Furthermore, for example, the control unit 240 of the terminal 20 illustrated in FIG. 16 may be implemented by a control program stored in the storage device 1002 and operated by the processor 1001. Although it has been described that the above-described various types of processing are executed by one processor 1001, the various types of processing may be executed simultaneously or sequentially by two or more processors 1001. The processor 1001 may be implemented by one or more chips. The program may be transmitted from a network via an electric communication line.

The storage device 1002 is a computer-readable recording medium, and may be configured with, for example, at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage device), or the like. The storage device 1002 can store a program (a program code), a software module, and the like that can be executed to implement the communication method according to the embodiment of the present disclosure.

The auxiliary storage device 1003 is a computer-readable recording medium, and may be configured with, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. The above-described storage medium may be, for example, a database including at least one of the storage device 1002 and the auxiliary storage device 1003, a server, or another appropriate medium.

The communication device 1004 is hardware (a transmission/reception device) for performing communication between computers via at least one of a wired network and a wireless network, and is also referred to as, for example, a network device, a network controller, a network card, a communication module, or the like. The communication device 1004 may be configured with a high-frequency switch, a duplexer, a filter, a frequency synthesizer, and the like to implement, for example, at least one of frequency division duplex (FDD) and time division duplex (TDD). For example, a transmission/reception antenna, an amplifier unit, a transmission/reception unit, a transmission/reception path interface, and the like may be implemented by the communication device 1004. The transmission/reception unit may be implemented such that the transmission unit and the reception unit are physically or logically separated from each other.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that performs an output to the outside. Note that the input device 1005 and the output device 1006 may be formed to be integrated with each other (for example, a touch panel).

In addition, the respective devices such as the processor 1001 and the storage device 1002 are connected to each other by the bus 1007 for communicating information. The bus 1007 may be configured using a single bus or may be configured using different buses between the devices.

Furthermore, the base station 10 and the terminal 20 may be configured to include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented using at least one of the pieces of hardware.

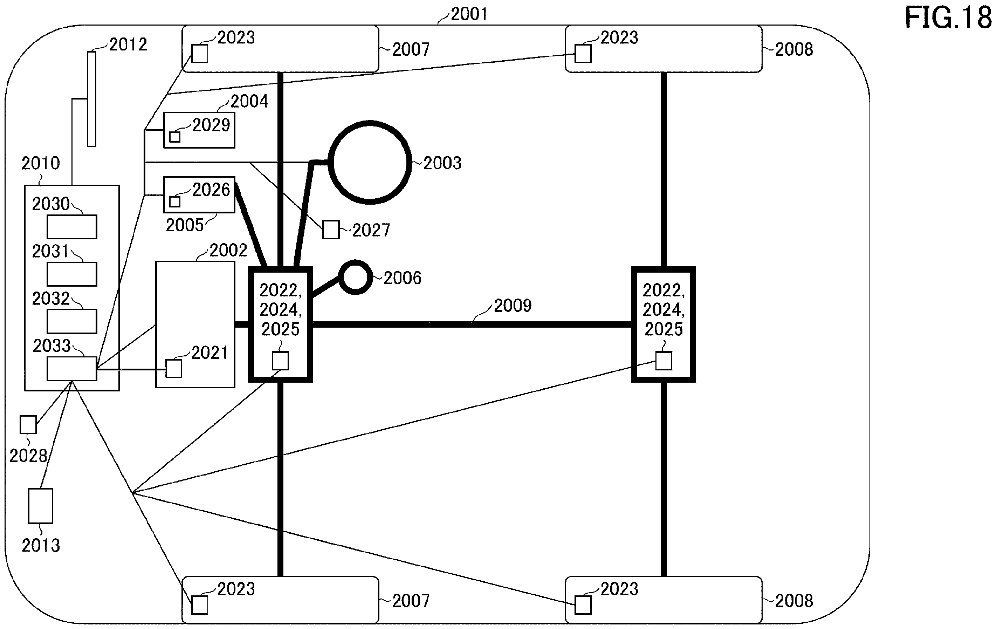

FIG. 18 illustrates a configuration example of a vehicle 2001. As illustrated in FIG. 18, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 includes, for example, an engine, a motor, or a hybrid of an engine and a motor. The steering unit 2003 includes at least a steering wheel (also referred to as a handle), and is configured to steer at least one of the front wheel and the rear wheel based on an operation of the steering wheel operated by a user.

The electronic control unit 2010 includes a microprocessor 2031, a memory (ROM, RAM) 2032, and a communication port (IO port) 2033. Signals from various sensors 2021 to 2029 provided in the vehicle 2001 are input to the electronic control unit 2010. The electronic control unit 2010 may be referred to as an electronic control unit (ECU).

Examples of signals from the various sensors 2021 to 2029 include a current signal from the current sensor 2021 that senses the current of the motor, a rotation speed signal of the front wheel and the rear wheel acquired by the rotation speed sensor 2022, an air pressure signal of the front wheel and the rear wheel acquired by the air pressure sensor 2023, a vehicle speed signal acquired by the vehicle speed sensor 2024, an acceleration signal acquired by the acceleration sensor 2025, a depression amount signal of an accelerator pedal acquired by the accelerator pedal sensor 2029, a depression amount signal of a brake pedal acquired by the brake pedal sensor 2026, an operation signal of a shift lever acquired by the shift lever sensor 2027, and a detection signal for detecting an obstacle, a vehicle, a pedestrian, and the like acquired by the object detection sensor 2028.

The information service unit 2012 is composed of: a variety of equipment, such as a car navigation system, an audio system, speakers, a television, and a radio, for providing (outputting) various types of information such as driving information, traffic information, and entertainment information; and one or more ECUs that control these pieces of equipment. The information service unit 2012 uses information obtained from an external device via the communication module 2013 or the like, to provide various types of multimedia information and multimedia services to the occupants of the vehicle 2001. The information service unit 2012 may include an input device for receiving inputs from the outside (for example, a keyboard, a mouse, a microphone, a switch, a button, a sensor, etc.), or include an output device for sending outputs to the outside (for example, a display, a speaker, an LED lamp, a touch panel, etc.).

A driving assistance system unit 2030 is configured with various devices for providing functions of preventing an accident in advance and reducing a driver's driving load, such as a millimeter wave radar, light detection and ranging (LiDAR), a camera, a positioning locator (for example, GNSS or the like), map information (for example, a high definition (HD) map, an autonomous vehicle (AV) map, and the like), a gyro system (for example, an inertial measurement unit (IMU), an inertial navigation system (INS), or the like), an artificial intelligence (AI) chip, and an AI processor, and one or more ECUs that control the devices. The driving assistance system unit 2030 also transmits and receives various types of information via the communication module 2013 to implement a driving assistance function or an automatic driving function.

The communication module 2013 may communicate with the microprocessor 2031 and components of the vehicle 2001 via a communication port. For example, the communication module 2013 transmits and receives, via the communication port 2033, data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensors 2021 to 2029 provided in the vehicle 2001.

The communication module 2013 is a communication device capable of being controlled by the microprocessor 2031 of the electronic control unit 2010 and capable of communicating with an external device. For example, various types of information are transmitted and received to and from the external device via wireless communication. The communication module 2013 may be provided on the inside or the outside of the electronic control unit 2010. The external device may be, for example, a base station, a mobile station, or the like.

The communication module 2013 may transmit at least one of: signals input to the electronic control unit 2010 from the sensors 2021 to 2028; information obtained based on these signals; and information based on inputs from the outside (user) obtained via the information service unit 2012, to external devices via wireless communication. The electronic control unit 2010, the sensors 2021 to 2028, the information service unit 2012, and the like may be referred to as an "input unit" that accepts inputs. For example, a PUSCH transmitted from the communication module 2013 may include information that is based on an input such as one described above.

The communication module 2013 receives various information (traffic information, signal information, inter-vehicle distance information, etc.) transmitted from external devices and displays these pieces of information on an information service unit 2012 provided in the vehicle 2001. The information service unit 2012 may also be referred to as an "output unit" that outputs information (or that, for example, outputs information to devices such as a display or a speaker based on a PDSCH (or data/information decoded from a PDSCH) received by the communication module 2013). In addition, the communication module 2013 stores the information received from the external devices in the memory 2032, to which the microprocessor 2031 has access. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and so forth, mounted in the vehicle 2001.

### (Summary of embodiment)

As described above, according to an embodiment of the present invention, a terminal is provided. The terminal includes: a transmitting unit configured to transmit a first signal to another terminal in an unlicensed band; and a control unit configured to carry out a first listen before talk (LBT) before the first signal is transmitted. When a predetermined condition is satisfied after the first LBT is started, the control unit cancels the first LBT and carries out a second LBT. When the second LBT is successfully carried out, the transmitting unit transmits the first signal to the another terminal.

According to the above-described structure and configuration, when LBT is carried out before an SL transmission in an unlicensed band, it is possible to switch to the minimum LBT method that satisfies the regulations, depending on the situation of communication. In other words, LBT can be applied properly to terminal-to-terminal direct communication in an unlicensed band.

The second LBT may have a shorter sensing period than the first LBT. According to the above-described structure and configuration, when LBT is carried out before an SL transmission in an unlicensed band, it is possible to switch to the minimum LBT method that satisfies the regulations, depending on the situation of communication.

When a second signal is transmitted in a predetermined period located immediately before a beginning of the first signal in time, the control unit may cancel the first LBT and carry out the second LBT. According to the above-described structure and configuration, when LBT is carried out before an SL transmission in an unlicensed band, it is possible to switch to the minimum LBT method that satisfies the regulations, depending on the situation of communication.

When a second signal is detected in a predetermined period located immediately before a beginning of the first signal in time, the control unit may cancel the first LBT and carry out the second LBT. According to the above-described structure and configuration, when LBT is carried out before an SL transmission in an unlicensed band, it is possible to switch to the minimum LBT method that satisfies the regulations, depending on the situation of communication.

When a transmission of a second signal is determined within a predetermined period located immediately before a beginning of the first signal in time, or when the transmission of the second signal reserved within the predetermined period located immediately before the beginning of the first signal in time is detected, the control unit may cancel the first LBT and carry out the second LBT. According to the above-described structure and configuration, when LBT is carried out before an SL transmission in an unlicensed band, it is possible to switch to the minimum LBT method that satisfies the regulations, depending on the situation of communication.

Also, according to an embodiment of the present invention, a communication method is provided. The communication method includes: a transmitting step of transmitting a first signal to another terminal in an unlicensed band; and a control step of carrying out a first listen before talk (LBT) before the first signal is transmitted. When a predetermined condition is satisfied after the first LBT is started, the first LBT is cancelled and a second LBT is carried out. When the second LBT is successfully carried out, the first signal is transmitted to the another terminal.

According to the above-described structure and configuration, when LBT is carried out before an SL transmission in an unlicensed band, it is possible to switch to the minimum LBT method that satisfies the regulations, depending on the situation of communication. In other words, LBT can be applied properly to terminal-to-terminal direct communication in an unlicensed band.

### (Supplement to Embodiment)

Although the embodiments of the present invention have been described above, the disclosed invention is not limited to such embodiments, and those skilled in the art will understand various modifications, revisions, alternatives, substitutions, and the like. Although the description has been given using specific numerical examples to facilitate understanding of the invention, the numerical values are merely examples, and any appropriate value may be used, unless otherwise specified. The classification of items in the above description is not essential to the present invention, and items described in two or more items may be used in combination as necessary, or items described in one item may be applied to items described in another item (as long as there is no contradiction). A boundary of a functional unit or a processing unit in the functional block diagram does not necessarily correspond to a boundary of a physical component. The operations of the plurality of functional units may be physically performed by one component, or the operation of one functional unit may be physically performed by a plurality of components. In the processing procedure described in the embodiment, the order of the processing may be changed as long as there is no contradiction. For convenience of processing description, the base station 10 and the terminal 20 have been described using a functional block diagram, but such a device may be implemented by hardware, software, or a combination thereof. Software operated by a processor included in the base station 10 according to the embodiments of the present invention, and software operated by a processor included in the terminal 20 according to the embodiments of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, the indication of information is not limited to the aspects/embodiments described in the present disclosure, and may be performed using other methods. For example, the indication of information may be performed by physical layer signaling (for example, downlink control information (DCI) and uplink control information (UCI)), upper layer signaling (for example, radio resource control (RRC) signaling and medium access control (MAC) signaling), broadcast information (master information block (MIB) and system information block (SIB)), other signals, or a combination thereof. Furthermore, the RRC signaling may be referred to as an RRC message, and may be referred to as, for example, an RRC connection setup message, an RRC connection reconfiguration message, or the like.

Each aspect/embodiment described in the present disclosure may be applied to at least one of a system utilizing long term evolution (LTE), LTE-Advanced (LTE-A), SUPER 3G, IMT-Advanced, 4th generation mobile communication system (4G), 5th generation mobile communication system (5G), 6th generation mobile communication system (6G), x-th generation mobile communication system (xG) (xG (x is, for example, an integer or a decimal)), future radio access (FRA), new radio (NR), new radio access (NX), future generation radio access (FX), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next generation system which is extended, modified, generated, and specified based thereon. Further, a plurality of systems may be applied in combination (for example, a combination of at least one of LTE and LTE-A and 5G, and the like).

The order of the processing procedure, sequence, flowchart, and the like of each aspect/embodiment described in the present specification may be changed as long as there is no contradiction. For example, for the method described in the present disclosure, elements of various steps are presented using an example order, and are not limited to the presented particular order.

The specific operation described as being performed by the base station 10 in the present specification may be performed by an upper node thereof in some cases. In a network including one or more network nodes including the base station 10, it is obvious that various operations performed for communication with the terminal 20 may be performed by at least one of the base station 10 and other network nodes (for example, MME, S-GW, or the like is conceivable, but the present invention is not limited thereto) other than the base station 10. Although a description has been given as to a case in which there is one other network node other than the base station 10, the other network node may be a combination of a plurality of other network nodes (for example, MME and S-GW).

Information, a signal, or the like described in the present disclosure can be output from an upper layer (or a lower layer) to a lower layer (or an upper layer). Input and output may be performed via a plurality of network nodes.

The input/output information and the like may be stored in a specific location (for example, in a memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a true/false value (Boolean: true or false), or may be made by comparison of numerical values (for example, comparison with a predetermined value) .

Software, whether referred to as software, firmware, middleware, microcode, hardware description language, or other names, should be construed broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, instructions, information, and the like may be transmitted and received via a transmission medium. For example, when software is transmitted from a website, a server, or other remote sources using at least one of a wired technology (a coaxial cable, an optical fiber cable, a twisted pair, a digital subscriber line (DSL), or the like) and a wireless technology (infrared rays, microwaves, or the like), at least one of the wired and wireless technologies is included within the definition of the transmission medium.

Information, signals, and the like described in the present disclosure may be represented using any one of a variety of different techniques. For example, data, an instruction, a command, information, a signal, a bit, a symbol, a chip, and the like which may be mentioned throughout the above description may be represented by a voltage, a current, an electromagnetic wave, a magnetic field or a particle, an optical field or a photon, or any combination thereof.

Note that the terms described in the present disclosure and the terms necessary for understanding the present disclosure may be replaced with terms having the same or similar meanings. For example, at least one of the channel and the symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

In addition, information, parameters, and the like described in the present disclosure may be represented using an absolute value, may be represented using a relative value from a predetermined value, or may be represented using another piece of corresponding information. For example, a radio resource may be indicated by an index.

The names used for parameters described above are not limitative names in any way. Furthermore, mathematical formulas and the like using the parameters may be different from those explicitly disclosed in the present disclosure. Since various channels (for example, PUCCH, PDCCH, and the like) and information elements can be identified by any suitable names, various names assigned to the various channels and information elements are not limitative names in any way.

In the present disclosure, terms such as "base station (BS)," "radio base station," "base station," "fixed station," "NodeB," "eNodeB (eNB)," "gNodeB (gNB)," "access point," "transmission point," "reception point," "transmission/reception point," "cell," "sector," "cell group," "carrier," and "component carrier" can be used interchangeably. The base station may also be referred to as a macro cell, a small cell, a femto cell, a pico cell, or the like.

The base station may accommodate one or more (for example, three) cells. When the base station accommodates a plurality of cells, an entire coverage area of the base station may be divided into a plurality of smaller areas, and each smaller area may also provide a communication service by a base station subsystem (for example, a small base station for indoor use (remote radio head (RRH)). The term "cell" or "sector" refers to a part or the whole of a coverage area of at least one of the base station and the base station subsystem that performs communication service in the coverage.

In the present disclosure, when a base station transmits information to a terminal, this may be interpreted to mean that the base station controls or send a command to the terminal based on the information.

In the present disclosure, terms such as "mobile station (MS)," "user terminal," "user equipment (UE)," and "terminal" can be used interchangeably.

The mobile station may also be referred to, by those skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be also referred to as a "transmission device," a "receiving device," a "communication device," or the like. At least one of the base station and the mobile station may be a device installed in a mobile entity, a mobile entity itself, or the like. The mobile entity refers to a movable object, and its speed of movement may be determined at its discretion. It also naturally includes the case where the mobile entity is stationary. Examples of the mobile entity include, but are not limited to, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship and other watercraft, airplanes, a rocket, an artificial satellite, a drone (registered trademark), a multicopter, a quadcopter, a balloon, and objects mounted on these. The mobile entity may also be a mobile entity that travels autonomously based on operation commands. The mobile object may be a vehicle (for example, a car, an airplane, or the like), a mobile object which is movable without human intervention (for example, a drone, a self-driving vehicle, or the like), or a robot (manned type or unmanned type). Note that at least one of the base station and the mobile station includes a device which does not necessarily move during communication operation. For example, at least one of the base station and the mobile station may be an Internet of Things (IoT) device such as a sensor.

In addition, the base station in the present disclosure may be replaced with the user terminal. For example, each aspect/embodiment of the present disclosure may be applied to a configuration in which communication between the base station and the user terminal is replaced with communication between a plurality of terminals 20 (for example, may be referred to as device-to-device (D2D), vehicle-to-everything (V2X), or the like). Here, the terminal 20 may have a function of the base station 10 described above. In addition, words such as "upstream" and "downstream" may be replaced with words corresponding to device-to-device communication (for example, "side"). For example, an uplink channel, a downlink channel, and the like may be replaced with a side channel.

Similarly, the user terminal in the present disclosure may be replaced with the base station. Here, the base station may have a function of the user terminal described above.

The terms "deciding" and "determining" used in the present disclosure may encompass a wide variety of actions. The terms "deciding" and "determining" may include considering, as "deciding" and "determining," what has been obtained by, for example, judging, calculating, computing, processing, deriving, investigating, searching (looking up, search, inquiry) (for example, searching in a table, a database, or another data structure), and ascertaining. Furthermore, "deciding" and "determining" may include considering, as "deciding" and "determining," what has been obtained by receiving (for example, receiving information), transmitting (for example, transmitting information), inputting, outputting, and accessing (for example, accessing data in a memory). In addition, "deciding" and "determining" may include considering, as "deciding" and "determining," what has been obtained by resolving, selecting, choosing, establishing, comparing, and the like. That is, "deciding" and "determining" may include considering some operations as "deciding," and "determining." Further, "deciding (determining)" may be replaced with "assuming," "expecting," "considering," or the like.

The terms "connected," "coupled," or any variation thereof mean any direct or indirect connection or coupling between two or more elements, and one or more intermediate elements may exist between two elements which are "connected" or "coupled" to each other. The coupling or connection between the elements may be physical, logical, or a combination thereof. For example, "connection" may be replaced with "access." As used in the disclosure, two elements can be considered to be "connected" or "coupled" to each other using at least one of one or more wires, cables, and printed electric connections, and as some non-limiting and non-inclusive examples, using electromagnetic energy having wavelengths in a radio frequency domain, a microwave region, and a light (both visible and invisible) region, and the like.

The reference signal may be abbreviated as RS, or may be referred to as a pilot according to an applied standard.

As used in the disclosure, the phrase "based on" does not mean "based only on," unless explicitly stated otherwise. In other words, the description "based on" means both "based only on" and "based at least on."

Any reference to elements using designations such as "first," "second," and the like as used in the present disclosure does not generally limit the amount or order of the elements. Such designations may be used in the present disclosure as a convenient way to distinguish between two or more elements. Thus, references to first and second elements do not imply that only two elements may be employed or that the first element must in any way precede the second element.

The "means" in the configuration of each device described above may be replaced with a "unit," a "circuit," a "device," or the like.

When the present disclosure uses the terms "include," "including," and variations thereof, the terms are intended to be inclusive in a manner similar to the term "comprising." Furthermore, the term "or" used in the present disclosure is intended not to be an exclusive OR.

A radio frame may be configured with one or more frames in a time domain. Each of one or more frames in the time domain may be referred to as a sub-frame. The sub-frame may be further configured with one or more slots in the time domain. The sub-frame may be a fixed time length (for example, 1 ms) which is independent of numerology.

The numerology may be a communication parameter applied to at least one of transmission and reception of a signal or a channel. The numerology may indicate at least one of, for example, a sub-carrier spacing (SCS), a bandwidth, a symbol length, a cyclic prefix length, a transmission time interval (TTI), the number of symbols per TTI, a radio frame configuration, a particular filtering operation performed by a transceiver in the frequency domain, a particular windowing operation performed by the transceiver in the time domain, and the like.

The slot may be configured with one or a plurality of symbols (an orthogonal frequency division multiplexing (OFDM) symbol, a single carrier frequency division multiple access (SC-FDMA) symbol, and the like) in the time domain. The slot may be a time unit based on the numerology.

The slot may include a plurality of mini-slots. Each mini-slot may be configured with one or more symbols in the time domain. Further, the mini-slot may be referred to as a sub-slot. The mini-slot may be configured with a smaller number of symbols than the slot. PDSCH (or PUSCH) transmitted in a time unit larger than the mini-slot may be referred to as a PDSCH (or PUSCH) mapping type A. PDSCH (or PUSCH) transmitted using the mini-slot may be referred to as a PDSCH (or PUSCH) mapping type B.

Each of the radio frame, the sub-frame, the slot, the mini-slot, and the symbol represents a time unit when a signal is transmitted. Different names respectively corresponding to the radio frame, the sub-frame, the slot, the mini-slot, and the symbol may be used.

For example, one sub-frame may be referred to as a transmission time interval (TTI), a plurality of consecutive sub-frames may be referred to as a TTI, and one slot or one mini-slot may be referred to as a TTI. That is, at least one of the sub-frame and the TTI may be a sub-frame (1 ms) in existing LTE, a period shorter than 1 ms (for example, 1 to 13 symbols), or a period longer than 1 ms. Note that the unit representing the TTI may be referred to as the slot, the mini-slot, or the like instead of the sub-frame.

Here, the TTI refers to, for example, a minimum time unit of scheduling in wireless communication. For example, in the LTE system, the base station performs scheduling of allocating radio resources (frequency bandwidth, transmission power, and the like that can be used in each terminal 20) to each terminal 20 in units of TTIs. Note that the definition of the TTI is not limited thereto.

The TTI may be a transmission time unit such as a channel coded data packet (a transport block), a code block, or a code word, or may be a processing unit such as scheduling or link adaptation. Note that, when a TTI is given, a time interval (for example, the number of symbols) in which the transport block, the code block, the code word, or the like is actually mapped may be shorter than the TTI.

Note that, when one slot or one mini-slot is referred to as the TTI, one or more TTIs (that is, one or more slots or one or more mini-slots) may be the minimum time unit of scheduling. Furthermore, the number of slots (the number of mini-slots) configuring the minimum time unit of the scheduling may be controlled.

A TTI with a time length of 1 ms may be referred to as a general TTI (TTI in LTE Rel. 8 to 12), a normal TTI, a long TTI, a general sub-frame, a normal sub-frame, a long sub-frame, a slot, or the like. A TTI shorter than the general TTI may be referred to as a shortened TTI, a short TTI, a partial TTI (or fractional TTI), a shortened sub-frame, a short sub-frame, a mini-slot, a sub-slot, a slot, or the like.

Note that the long TTI (for example, the general TTI, the sub-frame, or the like) may be replaced with a TTI having a time length exceeding 1 ms, and the short TTI (for example, the shortened TTI or the like) may be replaced with a TTI having a TTI length less than the TTI length of the long TTI and a length of 1 ms or more.

The resource block (RB) is a resource allocation unit in the time domain and the frequency domain, and may include one or a plurality of consecutive sub-carriers in the frequency domain. The number of sub-carriers included in the RB may be the same regardless of the numerology, and for example, may be 12. The number of sub-carriers included in the RB may be determined based on the numerology.

In addition, the time domain of the RB may include one or more symbols, and may be a length of one slot, one mini-slot, one sub-frame, or one TTI. Each of one TTI, one sub-frame, and the like may be configured with one or more resource blocks.

Note that one or a plurality of RBs may be referred to as a physical resource block (PRB), a sub-carrier group (SCG), a resource element group (REG), a PRB pair, an RB pair, or the like.

Furthermore, the resource block may include one or a plurality of resource elements (REs). For example, one RE may be a radio resource area of one sub-carrier and one symbol.

A bandwidth part (BWP) (which may also be referred to as partial bandwidth or the like) may represent a subset of contiguous common resource blocks (common RBs) for a numerology in a carrier. Here, the common RB may be specified by an index of the RB based on the common reference point of the carrier. The PRB may be defined by a certain BWP and numbered within the BWP.

The BWP may include a BWP for UL (UL BWP) and a BWP for DL (DL BWP). One or a plurality of BWPs may be set in one carrier for the terminal 20.

At least one of the set BWPs may be active, and the terminal 20 may not assume that a predetermined signal/channel is transmitted and received outside the active BWPs. Note that a "cell," a "carrier," and the like in the present disclosure may be replaced with "BWP."

The above-described structures such as the radio frame, the sub-frame, the slot, the mini-slot, and the symbol are merely examples. For example, the number of sub-frames included in the radio frame, the number of slots per subframe or radio frame, the number of mini-slots included in the slot, the number of symbols and RBs included in the slot or the mini-slot, the number of sub-carriers included in the RB, the number of symbols in the TTI, a symbol length, a cyclic prefix (CP) length, and the like can be variously changed.

In the present disclosure, for example, when articles such as a, an, and the in English are added by translation, the present disclosure may include a case in which a noun following the articles is a plural form.

In the present disclosure, the term "A and B are different" may mean "A and B are different from each other." Note that the term may mean that "A and B are different from C." Terms such as "separated" and "coupled" may be interpreted in the same manner as "different."

Each aspect/embodiment described in the present disclosure may be used alone, used in combination, or used by being switched with execution. Furthermore, indication of predetermined information (for example, indication of "being X") is not limited to being performed explicitly, and may be performed implicitly (for example, the predetermined information is not indicated).

Although the present disclosure has been described in detail above, it is apparent to those skilled in the art that the present disclosure is not limited to the embodiments described in the present disclosure. The present disclosure can be implemented as modifications and variations without departing from the spirit and scope of the present disclosure defined by the claims. Therefore, description of the present disclosure is given for the purpose of illustration and does not have any restrictive meaning to the present disclosure.

### Reference Signs List

- 10: base station
- 110: transmission unit
- 120: reception unit
- 130: configuration unit
- 140: control unit
- 20: terminal
- 210: transmission unit
- 220: reception unit
- 230: configuration unit
- 240: control unit
- 1001: processor
- 1002: storage device
- 1003: auxiliary storage device
- 1004: communication device
- 1005: input device
- 1006: output device
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: rotation speed sensor
- 2023: air pressure sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving assistance system unit
- 2031: microprocessor
- 2032: memory (ROM, RAM)
- 2033: communication port (IO port)

## Claims

1. A terminal comprising:
a transmitting unit configured to transmit a first signal to another terminal in an unlicensed band; and
a control unit configured to carry out a first listen before talk (LBT) before the first signal is transmitted,
wherein, when a predetermined condition is satisfied after the first LBT is started, the control unit cancels the first LBT and carries out a second LBT, and
wherein, when the second LBT is successfully carried out, the transmitting unit transmits the first signal to the another terminal.

2. The terminal according to claim 1, wherein the second LBT has a shorter sensing period than the first LBT.

3. The terminal according to claim 1, wherein, when a second signal is transmitted in a predetermined period located immediately before a beginning of the first signal in time, the control unit cancels the first LBT and carries out the second LBT.

4. The terminal according to claim 1, wherein, when a second signal is detected in a predetermined period located immediately before a beginning of the first signal in time, the control unit cancels the first LBT and carries out the second LBT.

5. The terminal according to claim 1, wherein, when a transmission of a second signal is determined within a predetermined period located immediately before a beginning of the first signal in time, or when the transmission of the second signal reserved within the predetermined period located immediately before the beginning of the first signal in time is detected, the control unit cancels the first LBT and carries out the second LBT.

6. A communication method comprising:
a transmitting step of transmitting a first signal to another terminal in an unlicensed band; and
a control step of carrying out a first listen before talk (LBT) before the first signal is transmitted,
wherein, when a predetermined condition is satisfied after the first LBT is started, the first LBT is cancelled and a second LBT is carried out, and
wherein, when the second LBT is successfully carried out, the first signal is transmitted to the another terminal.
